# DEMANDE DE BREVET EUROPEEN

(11) **EP 0 913 412 A1**
(43) Date de publication de la demande: **06.05.1999**
(21) Numéro de dépôt: 98402684.9
(22) Date de dépôt: 28.10.1998
(51) Int. Cl.: C08G 12/38

(54) **Procédé de préparation de résines thermodurcissables urée-formol dopées à la mélamine et utilisation de ces résines en tant que résines d'imprégnation**

(30) Priorité: 31.10.1997 FR 9713704
(71) Demandeur: ELF ATOCHEM S.A., 92800 Puteaux, Hauts-de-Seine (FR)
(72) Inventeur: Lalo, Jack, 31400 Toulouse (FR); Garrigue, Roger, 31000 Toulouse (FR)
(74) Mandataire: Rieux, Michel

(57) **Abrégé**

Pour fabriquer cette résine urée-formol dopée à la mélamine, (a) on ajoute de la mélamine à un mélange urée-formol de rapport F/NH₂ supérieur à 1,5, en milieu aqueux, à un pH compris entre 6 et 8 et à une température comprise entre 20 et 90°C, la quantité de mélamine étant telle que son taux dans la résine finale soit compris entre 1 et 5% en poids ; puis (b) on maintient le milieu réactionnel à une température de 80 à 103°C, à un pH de 6,5 à 7,8, pendant 5 à 15 minutes, puis à un pH inférieur jusqu'à ce que l'on obtienne une résine ayant un degré de condensation recherché ; puis (c) on ajuste le pH à une valeur de 7,2 à 7,5 en refroidissant le milieu réactionnel jusqu'à une température de 40 à 60°C, on ajoute de l'urée et le cas échéant, de l'eau, pendant un laps de temps pouvant aller jusqu'à 30 minutes, le rapport F/NH₂ étant alors de 0,45 à 0,85, et, après refroidissement on ajuste le pH final à une valeur de 8 à 10.

Conformément à la présente invention, on ajuste le pH final à l'aide d'au moins une alcanolamine, telle que triéthanolamine, méthyldiéthanolamine et diméthyléthanolamine.

## Description

La présente invention porte sur un procédé de préparation de résines thermodurcissables urée-formol dopées à la mélamine, ainsi que sur l'utilisation de ces résines en tant que résines d'imprégnation.

Les résines ci-dessus se présentent sous la forme de solutions aqueuses d'urée et de formol assez faiblement condensées. Ces solutions servent à l'imprégnation de matériaux supports absorbants, tels que le papier qui entre dans la fabrication de stratifiés.

Pour la mise en oeuvre de ces résines d'imprégnation, on prépare des mélanges d'imprégnation comprenant un condensat (ou précondensat) de résine, un agent de durcissement latent, tel qu'un sel d'amine, et, le cas échéant, des adjuvants usuels tels qu'agents démoulants, agents mouillants, solvants, plastifiants et opacifiants. Les agents de durcissement utilisés sont tels qu'après avoir été ajoutés aux résines, ils laissent des temps de mise en oeuvre suffisants à la température ambiante, et, en même temps, permettent d'atteindre des durcissements extrêmement courts aux températures de mise en oeuvre, c'est-à-dire à des températures de l'ordre de 100 à 200°C.

Les résines d'imprégnation doivent, en elles-mêmes, présenter une bonne stabilité, une bonne réactivité, une bonne imprégnabilité, une compatibilité avec les adjuvants classiques mentionnés ci-dessus et une compatibilité avec les résines mélamine - formol.

La baisse du rapport F/NH₂ des résines urée-formol s'accompagne soit d'un manque de stabilité dans le temps, soit d'un manque de réactivité.

Le besoin se fait donc sentir de mettre au point des résines d'imprégnation présentant des taux de formol réduits, une bonne stabilité doublée d'une bonne réactivité, ainsi qu'une bonne imprégnabilité du papier et similaires.

La demande de brevet français n° 2 741 884, qui décrit un procédé de fabrication d'une résine urée-formol dopée à la mélamine, a permis d'atteindre ces résultats.

La Société déposante a cependant découvert de manière surprenante que la stabilité de ces résines pouvait encore être améliorée si l'on réajuste le pH en fin de synthèse non pas par de la soude, mais par une alcanolamine.

A cet effet, la présente invention a pour objet un procédé de fabrication d'une résine urée-formol dopée à la mélamine, suivant lequel :
(a) on ajoute de la mélamine à un mélange urée-formol de rapport F/NH₂ supérieur à 1,5, en milieu aqueux, à un pH compris entre 6 et 8 et à une température comprise entre 20 et 90°C, la quantité de mélamine étant telle que son taux dans la résine finale soit compris entre 1 et 5% en poids ; puis
(b) on maintient le milieu réactionnel à une température de 80 à 103°C, à un pH de 6,5 à 7,8, pendant 5 à 15 minutes, puis à un pH inférieur jusqu'à ce que l'on obtienne une résine ayant un degré de condensation recherché ; puis
(c) on ajuste le pH à une valeur de 7,2 à 7,5 en refroidissant le milieu réactionnel jusqu'à une température de 40 à 60°C, on ajoute de l'urée et le cas échéant, de l'eau, pendant un laps de temps pouvant aller jusqu'à 30 minutes, le rapport F/NH₂ étant alors de 0,45 à 0,85, et, après refroidissement on ajuste le pH final à une valeur de 8 à 10,
caractérisé par le fait qu'on ajuste le pH final à l'aide d'au moins une alcanolamine, que l'on choisit notamment parmi la triéthanolamine, la méthyldiéthanolamine et la diméthyléthanolamine, la triéthanolamine étant préférée.

Pour la mise en oeuvre du procédé selon l'invention, on peut utiliser un mélange de départ urée/formol au moins partiellement sous la forme d'un précondensat urée/formol. On peut obtenir ledit précondensat en préparant un mélange urée-formol de rapport F/NH₂ compris entre 2 et 6,5, en milieu aqueux, en ajustant le pH à une valeur comprise entre 7 et 8,3, puis en chauffant au reflux (environ 103°C) pendant une durée pouvant aller jusqu'à 15 minutes en maintenant le pH au-dessus de 5,9 et/ou pendant une durée pouvant aller jusqu'à 30 minutes à un pH compris entre 4 et 6,5. On peut ajouter de l'urée au précondensat en même temps que la mélamine, afin d'obtenir le rapport F/NH₂ voulu, supérieur à 1,5.

Dans le procédé selon l'invention, le formol est utilisé sous la forme d'une solution aqueuse de concentration comprise entre 30 et 75% en poids.

A l'étape (b), on conduit la condensation d'abord au pH précité de 6,5 à 7,8, puis au pH inférieur qui est en particulier de 4 à 5,5. On suit l'évolution de la condensation en mesurant la tolérance à l'eau : on ajoute x volumes d'eau à 1 volume de résine et on détermine la température pour laquelle le mélange passe de limpide à trouble ; la valeur de x choisie, qui conditionne la qualité du produit fini dépend des paramètres ci-dessus et notamment de la composition de la résine finale.

En général, le temps de condensation au pH de 4 à 5,5 est de 60 à 120 minutes.

Par ailleurs, on peut introduire dans le milieu réactionnel un sulfite alcalin, comme le métabisulfite de sodium, dans une quantité telle que son taux dans la résine finale ne dépasse pas 2% en poids.

On peut également introduire du méthanol dans le milieu réactionnel dans une quantité telle que son taux dans la résine finale ne dépasse pas 5% en poids.

La condensation en présence de mélamine selon l'invention et la préparation du précondensat si elle a lieu sont généralement conduites à une concentration en matières actives comprises entre 35 et 70% en poids ; quant à l'étape postérieure (c), elle est généralement conduite à une concentration en matières actives comprise entre 50 et 80% en poids.

La présente invention porte également sur l'utilisation de la résine ainsi obtenue comme résine aminoplaste thermodurcissable d'imprégnation.

Les Exemples suivants illustrent la présente invention sans toutefois en limiter la portée. Dans ces exemples, les pourcentages sont donnés en poids sauf indication contraire.

### Exemple 1 : Préparation des résines A1, A2 et A3

On prépare chacune des trois résines en introduisant dans une réacteur 1263 g d'une solution aqueuse de formol à 37% (15,58 moles), 10 g de métabisulfite de sodium. On ajuste la valeur du pH aux environs de 7 par addition d'une solution aqueuse de soude à 10%, puis on ajoute 144 g d'urée (2,4 moles) et 60 g de mélamine (0,476 mole).

On chauffe le milieu réactionnel à 98°C et on maintient le pH à 6,5 pendant 10 minutes. La valeur du pH est ensuite amenée à 4,6 (acide formique à 10%). La réaction de condensation est alors suivie, pour chacune des trois résines A1, A2 et A3, par la mesure de la tolérance à l'eau 4/1 (volume/volume).

Lorsque le test d'arrêt est atteint, dont les valeurs sont données dans le Tableau 1, la valeur du pH est ajustée à 7,2 et la température du milieu réactionnel est amenée à 60°C.

**Tableau 1**

| Résine | A1 | A2 | A3 |
|---|---|---|---|
| Test d'arrêt °C | 18 | 16 | 20 |

Pour chacune des résines A1, A2 et A3, l'urée finale, soit 532 g, est introduite en 30 minutes. La température de chaque milieu réactionnel est maintenue à cette valeur pendant toute la durée de l'introduction. Chaque milieu réactionnel est ensuite refroidi à 20°C. Une fois parvenu à cette température, chacun des milieux réactionnels est partagé en deux fractions dont la valeur du pH est ajustée à 8,7, par addition d'une solution aqueuse de soude à 10% dans le cas de la première fraction, et par addition de triéthanolamine dans le cas de la seconde fraction.

Les analyses des produits finals sont indiqués dans le Tableau 2.

### Exemples 2 : Préparation de la résine B

Dans un réacteur, on introduit 2600 g de solution aqueuse de formol à 37% (32,1 moles), 20 g de métabisulfite de sodium. On ajuste la valeur du pH aux environs de 7 par addition d'une solution aqueuse de soude à 10% puis on ajoute 326 g d'urée (5,43 moles) et 83 g de mélamine (0,66 mole).

On chauffe le milieu réactionnel à 98°C et on maintient le pH à 6,5 pendant 10 minutes. La valeur du pH est ensuite amenée à 4 (acide formique à 10%). La réaction de condensation est alors suivie par la mesure de la tolérance à l'eau.

Lorsque le test d'arrêt est atteint, tolérance à l'eau 4/1 à 16°C, la valeur du pH est ajustée à 7,2 et la température du milieu réactionnel est amenée à 60°C. L'urée finale, soit 1095 g (18,25 moles), est introduite en 30 minutes. La température du milieu réactionnel est maintenue à cette valeur pendant toute la durée de l'introduction. Le milieu réactionnel est ensuite refroidi à 20°C.

Une fois parvenu à cette température, le milieu réactionnel est partagé en deux fractions dont la valeur du pH est ajustée à 8,7, par addition d'une solution aqueuse de soude à 10% dans le cas de la première fraction, et par addition de triéthanolamine dans le cas de la seconde fraction.

Les analyses des produits finals sont indiqués dans le Tableau 2.

### Exemple 3 : Préparation de la résine C

Dans un réacteur, on introduit 2600 g de solution aqueuse de formol à 37% (32,1 moles), 19 g de métabisulfite de sodium. On ajuste la valeur du pH aux environs de 7 par addition d'une solution aqueuse de soude à 10%, puis on ajoute 329 g d'urée (5,48 moles) et 79 g de mélamine (0,63 mole).

On chauffe le milieu réactionnel à 98°C et on maintient le pH à 6,5 pendant 10 minutes. La valeur du pH est ensuite amenée à 4 (acide formique à 10%). La réaction de condensation est alors suivie par la mesure de la tolérance à l'eau.

Lorsque le test d'arrêt est atteint, tolérance à l'eau 4/1 à 10°C, la valeur du pH est ajustée à 7,2 et la température du milieu réactionnel est amenée à 60°C.

L'urée finale, soit 898 g (15 moles), est introduite en 30 minutes. La température du milieu réactionnel est maintenue à cette valeur pendant toute la durée de l'introduction. Le milieu réactionnel est ensuite refroidi à 20°C.

Une fois parvenu à cette température, le milieu réactionnel est partagé en deux fractions dont la valeur du pH est ajustée à 8,7, par addition d'une solution aqueuse de soude à 10% dans le cas de la première fraction, et par addition de triéthanolamine dans le cas de la seconde fraction.

Les analyses des produits finals sont indiqués dans le Tableau 2.

### Exemple 4 : Préparation de la résine D

Dans un réacteur, on introduit 6315 g d'une solution aqueuse de formol à 37% (77.9 moles), 50 g de métabisulfite de sodium et 720 g d'urée (12 moles). On chauffe légèrement le milieu réactionnel jusqu'à ce que l'urée soit mise en solution. On ajuste alors la valeur du pH à 7 par addition d'une solution aqueuse de soude à 10%, et on chauffe le mélange réactionnel à la température de reflux. On maintient la valeur du pH au-dessus de 6 par addition de soude. Après 10 minutes de reflux, on ajuste la valeur du pH à 4,2 par addition d'une solution aqueuse d'acide formique à 10%. Le milieu réactionnel est maintenu à reflux et à pH = 4,2 pendant 30 minutes.

Après avoir ajusté la valeur du pH à 6,8 par addition de soude, et la température du milieu réactionnel à 80°C, on ajoute 300 g de mélamine.

On amène la température du milieu réactionnel à 98°C, et on maintient le pH à une valeur comprise entre 6,9 et 7,1. Après 10 minutes à 98°C, on ajuste la valeur du pH du milieu réactionnel à 4,6 par addition d'acide formique. La réaction de condensation est suivie par la mesure de la tolérance à l'eau. Le test d'arrêt est la tolérance à l'eau 4/1 (volume/volume) à 18°C.

Lorsque le test d'arrêt est atteint, la valeur du pH est ajustée à 7,2 et le milieu réactionnel est refroidi à la température de 40°C. A cette température, 2660 g d'urée sont ajoutés.

Une fois parvenu à cette température, le milieu réactionnel est partagé en deux fractions dont la valeur du pH est ajustée à 8,7, par addition d'une solution aqueuse de soude à 10% dans le cas de la première fraction, et par addition de triéthanolamine dans le cas de la seconde fraction.

Les analyses des produits finals sont indiqués dans le Tableau 2.

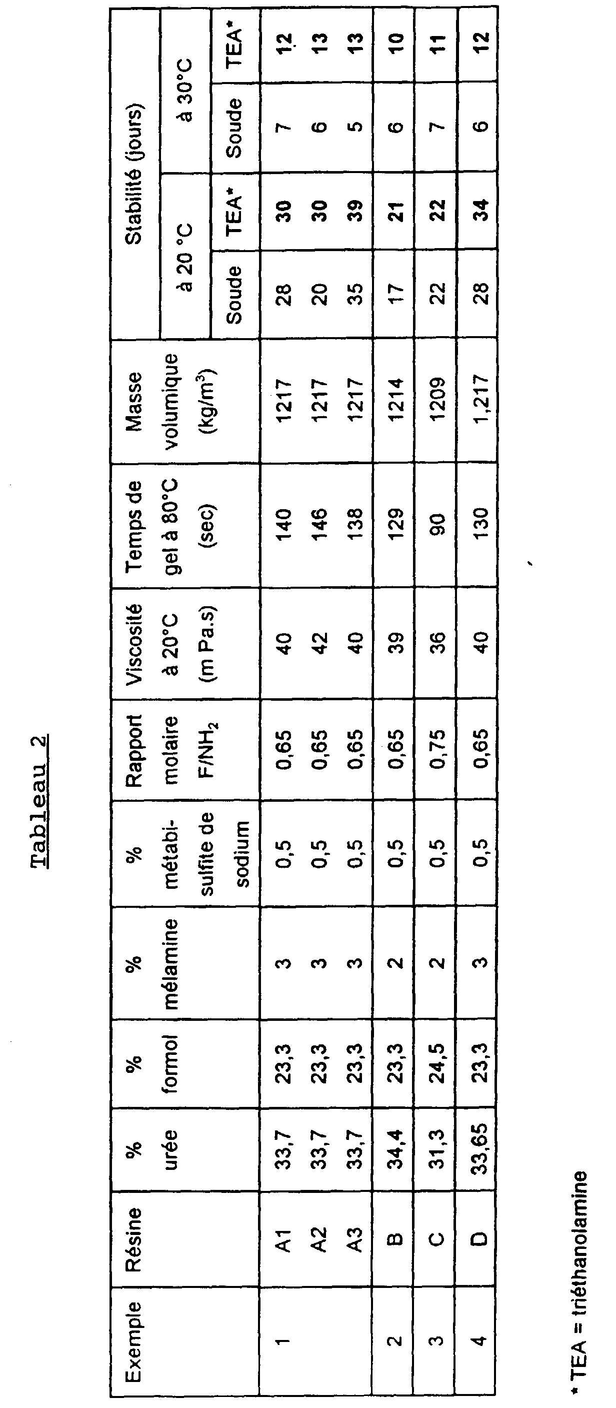

## Revendications

1. Procédé de fabrication d'une résine urée-formol dopée à la mélamine, suivant lequel :
(a) on ajoute de la mélamine à un mélange urée-formol de rapport F/NH₂ supérieur à 1,5, en milieu aqueux, à un pH compris entre 6 et 8 et à une température comprise entre 20 et 90°C, la quantité de mélamine étant telle que son taux dans la résine finale soit compris entre 1 et 5% en poids ; puis
(b) on maintient le milieu réactionnel à une température de 80 à 103°C, à un pH de 6,5 à 7,8, pendant 5 à 15 minutes, puis à un pH inférieur jusqu'à ce que l'on obtienne une résine ayant un degré de condensation recherché ; puis
(c) on ajuste le pH à une valeur de 7,2 à 7,5 en refroidissant le milieu réactionnel jusqu'à une température de 40 à 60°C, on ajoute de l'urée et le cas échéant, de l'eau, pendant un laps de temps pouvant aller jusqu'à 30 minutes, le rapport F/NH₂ étant alors de 0,45 à 0,85, et, après refroidissement on ajuste le pH final à une valeur de 8 à 10,
caractérisé par le fait qu'on ajuste le pH final à l'aide d'au moins une alcanolamine.

2. Procédé selon la revendication 1, caractérisé par le fait qu'on choisit le(s) alcanolamine(s) parmi la triéthanolamine, la méthyldiéthanolamine et la diméthyléthanolamine.

3. Procédé selon la revendication 2, caractérisé par le fait que l'on utilise la triéthanolamine.

4. Procédé selon l'une des revendications 1 et 2, caractérisé par le fait qu'on utilise un mélange de départ urée/formol au moins partiellement sous la forme d'un précondensat urée/formol.

5. Procédé selon la revendication 4, caractérisé par le fait qu'on obtient ledit précondensat en préparant un mélange urée-formol de rapport F/NH₂ compris entre 2 et 6,5, en milieu aqueux, en ajustant le pH à une valeur comprise entre 7 et 8,3, puis en chauffant au reflux pendant une durée pouvant aller jusqu'à 15 minutes en maintenant le pH au-dessus de 5,9 et/ou pendant une durée pouvant aller jusqu'à 30 minutes à un pH compris entre 4 et 6,5.

6. Procédé selon la revendication 5, caractérisé par le fait qu'on ajoute de l'urée au précondensat en même temps que la mélamine, afin d'obtenir le rapport F/NH₂ voulu, supérieur à 1,5.

7. Procédé selon l'une des revendications 1 à 6, caractérisé par le fait que le formol est utilisé sous la forme d'une solution aqueuse de concentration comprise entre 30 et 75% en poids.

8. Procédé selon l'une des revendications 1 à 7, caractérisé par le fait que à l'étape (b), on conduit la condensation d'abord au pH précité de 6,5 à 7,8, puis à un pH de 4 à 5,5.

9. Procédé selon l'une des revendications 1 à 8, caractérisé par le fait qu'on introduit dans le milieu réactionnel un sulfite alcalin, comme le métabisulfite de sodium, dans une quantité telle que son taux dans la résine finale ne dépasse pas 2% en poids.

10. Procédé selon l'une des revendications 1 à 9, caractérisé par le fait qu'on introduit du méthanol dans le milieu réactionnel dans une quantité telle que son taux dans la résine finale ne dépasse pas 5% en poids.

11. Utilisation de la résine obtenue par le procédé tel que défini à l'une des revendications 1 à 10 comme résine aminoplaste thermodurcissable d'imprégnation.
